(19) Europäisches Patentamt

European Patent Office

Office européen des brevets

(11) Publication number: **0 336 749 B1**

(12) **EUROPEAN PATENT SPECIFICATION**

(45) Date of publication of patent specification: **03.11.93**

(51) Int. Cl.5: **B01F 17/04**, C04B 24/16

(21) Application number: **89303393.6**

(22) Date of filing: **06.04.89**

(54) Foaming agent.

(30) Priority: **07.04.88 CA 563517**
**04.04.89 US 333078**

(43) Date of publication of application:
**11.10.89 Bulletin 89/41**

(45) Publication of the grant of the patent:
**03.11.93 Bulletin 93/44**

(84) Designated Contracting States:
**AT BE CH DE ES FR GB GR IT LI LU NL SE**

(56) References cited:
**EP-A- 0 204 370**
**US-A- 3 782 983**
**US-A- 4 156 615**
**US-A- 4 618 370**

(73) Proprietor: **STEPAN CANADA INC.**
**1136 Matheson Boulevard**
**Mississauga, Ontario L4W 2V4(CA)**

(72) Inventor: **Diez, Ricardo**
**2575 Cavendish Drive**
**Burlington Ontario, L7P 4E3(CA)**
Inventor: **Pidnebesny, John**
**23 Woodside Avenue**
**Toronto, Ontario, M6P 1L6(CA)**
Inventor: **Ng, Susanna**
**24 Rembrandt Crescent**
**Brampton Ontario, L6Y 3V5(CA)**

(74) Representative: **Gore, Peter Manson et al**
**W.P. THOMPSON & CO.**
**Coopers Building**
**Church Street**
**Liverpool L1 3AB (GB)**

EP 0 336 749 B1

**Description**

The present invention relates to an improved foaming agent, particularly one having a greater capacity for producing foam. The present invention is especially directed to such foaming agents to be used in the making of gypsum products and to the products so made, to other end uses, for instance, fire fighting foams.

In CA-A- 1 085 880 and US-A- 4 156 615 there is disclosed an alkyl ether sulphate, having an improved performance for the manufacture of gypsum, which is

$CH_3(CH_2)_xCH_2$-$(OCH_2CH_2)_y$-$OSO_3M$

in which:

$CH_3(CH_2)_xCH_2$ is the alkyl group

$(OCH_2CH_2)_y$ is the ether group

M is the cation ($NH_4$ or Na)

wherein x is between 6 and 8, and has an average value of 6.5-7.5 and y is between 1.5 and 2.5 (which herein is also referred to as Type A).

It should be noted that in those Patent Specifications, the performance is measured on the basis of the stiffening time of the gypsum slurries (Example 1), heat savings (Example 2) and reduced product consumption to achieve similar thermal set times (Example 3).

In US-A- 4 678 515 there are disclosed sufactants with improved foaming properties by means of mixing about 11 to 33% of alkyl ether sulphates in which x = 10 to 12 and y = 1 to 3.0, with surfactants of Type A as described above to obtain an average x between 6 to 12.

In US-A- 4 678 515 performance is measured on the basis of the amount of foam and foam stability produced by the surfactants when added to the supernatant liquid of a saturated gypsum solution (as seen in column 2, line 34 of US-A- 4 678 515) from which gypsum, which is mainly composed of calcium sulphate, has been removed. By operating in this manner, the foaming tests are conducted in the presence of a constant or "static" amount of Ca ions, which is determined by the solubility product of calcium sulphate.

Alkyl ether sulphate surfactants are sensitive to Ca ions: they react to form the calcium salt of the ether sulphate which may be water insoluble.

In a Ca ion "static" system, as that used in US-A-4 678 515 to conduct the foaming tests, when a free Ca ion reacts with the ether sulphate to form an insoluble surfactant, the reacted Ca ion cannot be replaced by another Ca ion (as governed by the solubility product) because the source of Ca ions, i.e. gypsum, has been removed from the system.

In the actual manufacturing of gypsum board, the ether sulphate is exposed to a continuous flow of Ca ions, in the sense that for every free Ca ion removed from solution due to reaction with ether sulphate, another Ca ion is supplied by the gypsum material (to maintain constant the solubility product) which, in turn, may form another insoluble Ca surfactant, and so on.

As a result of this procedure, the foaming profile of an ether sulphate surfactant may be different in a "static" foaming test and in the actual manufacture of gypsum board, especially if the "static" foaming test is carried out under conditions in which the surfactant is tested using great amounts of surfactant relative to the amount of free and/or replaceable Ca ions than the foaming agent may encounter during the actual manufacturing of gypsum board.

It should be born in mind that in US-A- 4 678 515 there is no indication of the performance of the foaming agents on the actual manufacture of gypsum material made from gypsum slurries in terms of foam entrained in finished gypsum, as in the real manufacturing, i.e. when the foaming agent is exposed to a continuous flow of free Ca ions. In fact, the best results in US-A- 4 678 515 are obtained when the foamers are evaluated in "static" foaming tests with large amounts of surfactants, i.e. under excess of foaming agent relative to the "static" amount of Ca ions.

According to the present invention there is provided a foaming agent which comprises a blend of alkyl sulphates and alkyl ether sulphates having an improved foaming performance, wherein the blend has the general formula:

$CH_3(CH_2)_xCH_2$-$(OCH_2CH_2)_y$-$OSO_3M$, wherein at least 90% (preferably at least 98%) of x is between 6 and 8,

the $CH_3(CH_2)_xCH_2$ is forming a chain selected from at least one of linear and branched chains,

the average y is between 0.4 and 1.3 (preferably 0.7 to 0.9), and wherein M is a cation producing a water soluble surfactant.

The invention also provides an improvement in a method of making gypsum board using a blend of alkyl sulphates and alkyl ether sulphates having the general formula:

$CH_3(CH_2)_xCH_2$-$(OCH_2CH_2)_y$-$OSO_3M$ as described above, the improvement comprising mixing with gypsum a foaming agent of the present invention, wherein at least 90% of x is between 6 and 8, said $CH_3$-$(CH_2)_xCH_2$ is forming a chain selected from at least one of linear and branched chains, the average y is between 0.4 and 1.3 and wherein M is a cation producing a water soluble surfactant.

The present invention further provides a new gypsum product containing the residual foaming agent as defined above, the improved foaming performance of which is shown, for example, in Tables 3 and 4 hereinbelow.

Preferably, on a weight percent distribution of the oxyethylene oligomers, the oligomeric species in which y = o is from 78.9 to 27.0% and the sum of oligomeric species from y = o to 5 is 95.5 to 83.8% of the total oligomeric content.

Preferably, on a mole percent distribution of the oxyethylene oligomers, the sum of oligomers from y = o to 3 is from 93.4 to 79.9% of the total oligomeric content.

A particularly useful foaming agent is an ammonium alkylether sulphate. Preferably $(CH_2)_x$ is a linear chain.

Preferably the % of foam in gypsum blocks, using the gypsum block method, is at least 25.6%.

A preferred manner of producing the products of the present invention is by a direct method which comprises reacting in a molar ratio of the order of 0.4 to 1.3:1 (and most preferably 0.8:1) ethylene oxide with linear and/or branched fatty alcohols having at least 90%, preferably 98% and more, of 8 to 10 carbon atoms, in the presence of a catalyst to incorporate the ethylene oxide groups. Typical examples of such catalysts include NaOH and KOH. Once the ethylene oxide groups are incorporated, the ethoxylated fatty alcohols are then sulphated with a sulphating agent and then neutralization is accomplished to obtain directly the new foaming agent.

Typical examples of a cation producing a water soluble surfactant includes sodium, potassium, calcium, magnesium and the like, and preferably ammonium (for providing M).

The foaming agent is preferably diluted with a carrier wherein the foaming agent is the major constituent, i.e. at least 50%. Typical carriers are preferably alcohols having low molecular weight such as, for example, methanol, ethanol, propanol.

This foaming agent is particularly useful in the making of gypsum board and used in catalytic amounts. Preferably that catalytic amount is 0.03±0.01% per 100 parts of stucco as determined by the (CTFA) method 8-1 of the Cosmetic Toiletry & Fragrance Association of Washington, D.C. This foaming agent is generally used for such a purpose in a diluted form such as those described hereinbelow.

The product of the present invention contains a greater % foam in gypsum product with respect to the amount on weight basis of foaming agent.

There are other indirect ways of producing the products of the present invention such as, for example, by blending fatty alcohols with ethoxylated fatty alcohols to obtain the average y of between 0.4 and 1.3 (and preferably 0.7 to 0.9), followed by sulphation of the blend with a sulphating agent and then neutralizing the mixture, or by reacting fatty alcohols with a sulphating agent, neutralizing it and blending this reaction product with an alkyl ether sulphate to obtain the average y of 0.4-1.3 and preferably 0.7-0.9.

The present invention will now be further described with reference to, but is in no manner limited to the following Examples.

EXAMPLES 1 to 6

The foaming agent of Example 1 was prepared by blending 25% of the ethoxylate of Sample A with 75% of Sample E which is a mixture of linear fatty alcohols wherein at least 90% of x is between 6 and 8 and having 0 as y value and then sulphating the blend.

The foaming agent of Example 2 was prepared by blending 50% of Sample E and 50% of the ethoxylate of Sample A and then sulphating the blend.

The foaming agent of Example 3 was prepared by the direct method described above.

The foaming agent of Example 4 was prepared as in Example 3 but replacing approximately 50% of linear octanol by an equivalent amount of branched ethyl hexanol.

The foaming agent of Example 5 was prepared by blending 25% of Sample E and 75% of the ethoxylate of Sample A and then sulphating the blend.

The foaming agent of Example 6 was prepared by blending 50% of the ethoxylate of Example 3 and 50% of the ethoxylate of Sample A and then sulphating the blend.

THE GYPSUM BLOCK METHOD

Using a method simulating the manufacture of gypsum wallboard, gypsum blocks were made as follows:

1. The foaming agent is diluted in water to obtain a solution having a concentration of 0.50% for a 100% active basis alkyl ether sulphate wherein at least 90% of x is between 6 and 8 and the average y is as shown in Table 1.

2. The following blend is then prepared: 10g of above solution; 145g of water; 200g of stucco; and about 2g of additives normally used in the manufacturing of wallboard, such as, for example, binders, accelerators, and the like.

3. The above blend is allowed to stand for 30 s and then mixed for 15 s in a Hamilton Beach Mixer.

4. The resulting slurry is poured into plastic moulds. The blocks are then dried at 43°C for 48 h.

5. The performance of the foamers is measured in terms of % foam entrained in the blocks. This value is obtained via a simple mathematical calculation which considers the weight of the blocks before and after drying and the density of stucco. The % foam of the gypsum blocks is shown in Table 1 for Examples 1 to 6.

The same was carried out according to the prior art:

Sample A using CA-A- 1 085 880 and US-A- 4 156 615.

Samples C and D using amongst the best species of Table 2 of US-A- 4 678 515 i.e. Material Tested I and IV of Table 2 Column 4 of that Specification, Sample B corresponding to "B" of said Table 2.

Results are shown in Table 2, as Samples A, C and D.

TABLE 1

| EXAMPLE | y average Ether Group | % volume foam in gypsum Blocks |
|---------|-----------------------|--------------------------------|
| 1 | 0.4 | 25.6 |
| 2 | 0.8 | 26.4 |
| 3 | 0.8 | 26.4 |
| 4 | 0.8 | 26.0 |
| 5 | 1.3 | 26.1 |
| 6 | 1.3 | 25.8 |

TABLE 2

| Sample | x value (Alkyl group) | y average (Ether group) | % foam in gypsum blocks |
|--------|-----------------------|-------------------------|-------------------------|
| A) CA-A-085 880 and US-A-4 156 615 | about 50% by weight of x=6 and 50% of x=8 | 2.2 | 24.4 |
| B) | about 50% by weight of x=6 and 50% of x=8 | 3.0 | 23.0 |
| C) As per Table 2, Example I of US-A- 4 678 515 a mixture of surfactant of Sample A and 12.5% of surfactant having about 67% of x=10, about 33% of x = 12, with an average y value of 1.9 | | | 22.5 |
| D) As per Table 2, Example IV of US-A- 4 678 515 a mixture of 75% of Sample B and 25% of surfactant having about 67% of x=10 and 33% of x=12, with an average y value of 2.6 | | | 19.9 |

The performance of the foaming agents as can be clearly seen, are directly assessed by the actual making of gypsum products, i.e. blocks, and measuring in the gypsum blocks, the "% volume of foam" which relates to the amount of air entrained in the blocks. This is contrary to the prior art that use arbitrary and direct methods. According to this test in the making of the gypsum blocks containing the foaming agent left as residuum, the higher the % volume of foam the lighter the block and, therefore, the better the performance of the foamer.

As can be seen, Example 1 of US-A- 4 678 515 produces a gypsum block having 22.5% volume foam (our sample C). Example IV produces a gypsum block having 19.9% volume foam (our sample D). The product from CA-A- 1 085 880 and US-A- 4 156 615 yields a gypsum block having 24.4% volume foam, as compared to the product of the present invention which has foam volume of 25.8 to 26.4%. This means substantial improvement achieved by the product of the present invention and particularly improvement of 10 to 25% over the products made according to the teaching of US-A- 4 678 515. No foaming agent is taught in the prior art which shows the % volume foam in gypsum blocks that is equal to those shown in Examples 1 to 6. It is clear that foaming agents comprising a blend of alkyl ether sulphates as described in

5

Examples 1 to 6 have substantial improved foaming performance.

Such a result cannot be obtained when following US-A- 4 678 515 (19.9-22.5%) and even when following CA-A- 1 085 880 and US-A- 4 156 615.

It has now also been determined the distribution ratio of the oxyethylene oligomers of the foaming agents by High Performance Liquid Chromotography (HPLC).

$$\frac{CH_3(CH_2)_x CH_2-(OCH_2CH_2)_y-CH}{\sum\limits_{y=n}^{y=o} CH_3(CH_2)yCH_2-(OCH_2CH_2)_y-OH}$$

n = 0, 1, 2, 3, 4, 5, ....12

The denominator represents the total oligomeric content.

Results are shown in Table 3 in % weight and Table 4 in % mole, where a Sample E when y = O and a new Sample F when y = 3 were introduced to clearly demonstrate the present invention.

As seen herein below, the distribution ratio of the oligomers is an important characteristic of the foaming agents since the distribution affects both the sensitivity to Ca ions and the intrinsic foaming performance of the foaming agents.

6

TABLE 3

| Example | Average y (Ether Group) | % Foam Gypsum Blocks | Distribution of Oxyethylene Oligomers (% weight) | | | | | | | | |
|---|---|---|---|---|---|---|---|---|---|---|---|
| | | | 0 | 1 | 2 | 3 | 4 | 5 | (0-5) | 6 | 7-12 |
| 1 | 0.4 | 25.6 | 78.9 | 3.5 | 3.6 | 3.5 | 3.0 | 2.2 | (94.6) | 1.8 | 3.6 |
| 2 | 0.8 | 26.4 | 57.8 | 7.0 | 7.1 | 7.0 | 6.0 | 4.4 | (88.3) | 3.5 | 7.2 |
| 3/4 | 0.8 | 26.4 | 40.5 | 21.7 | 15.2 | 9.7 | 5.4 | 3.0 | (95.5) | 1.8 | 2.7 |
| 5 | 1.3 | 26.1 | 36.6 | 10.5 | 10.6 | 10.6 | 9.0 | 6.5 | (83.8) | 5.2 | 10.9 |
| 6 | 1.3 | 25.8 | 27.0 | 17.8 | 14.7 | 11.9 | 8.7 | 5.8 | (86.9) | 4.4 | 8.7 |
| Samples | | | | | | | | | | | |
| A* | 2.2 | 24.4 | 15.5 | 14.0 | 14.2 | 14.1 | 12.0 | 8.7 | (78.5) | 7.0 | 14.5 |
| E | 0 | 23.2 | 100.0 | - | - | - | - | - | (100) | - | - |
| F | 3.0 | 23.0 | 15.1 | 5.2 | 7.8 | 10.4 | 11.2 | 10.7 | (60.4) | 9.8 | 29.8 |

*CA-A- 1 085 880 and US- A- 4 156 615

EP 0 336 749 B1

TABLE 4

Distribution of oxyethylene Oligomers (% mole)

| Example | Average y (Ether Group) | % Foam Gypsum Blocks | 0 | 1 | 2 | 3 | (0-3) | 4 | 5 | 6-12 |
|---|---|---|---|---|---|---|---|---|---|---|
| 1 | 0.4 | 25.6 | 81.7 | 4.6 | 3.8 | 3.2 | (93.3) | 2.3 | 1.5 | 2.9 |
| 2 | 0.8 | 26.4 | 63.4 | 9.2 | 7.6 | 6.4 | (86.6) | 4.6 | 3.0 | 5.8 |
| 3/4 | 0.8 | 26.4 | 52.8 | 21.7 | 12.3 | 6.6 | (93.4) | 3.2 | 1.6 | 1.8 |
| 5 | 1.3 | 26.1 | 45.0 | 13.9 | 11.4 | 9.6 | (79.9) | 7.0 | 4.5 | 8.6 |
| 6 | 1.3 | 25.8 | 39.8 | 20.1 | 13.8 | 9.7 | (83.4) | 6.2 | 3.8 | 6.6 |
| Samples | | | | | | | | | | |
| A | 2.2 | 24.4 | 26.7 | 18.5 | 15.2 | 12.8 | (73.2) | 9.3 | 6.0 | 11.5 |
| E | 0 | 23.2 | 100.0 | - | - | - | (100) | - | - | - |
| F | 3.0 | 23.0 | 21.4 | 8.9 | 10.8 | 12.1 | (53.2) | 11.2 | 9.4 | 26.2 |

It is clear from Table 3 that best performance in % foam gypsum blocks is when the % weight ratio is from 78.9 to 27.0 for the oligomer y = o and 95.5 to 83.8 for y = the sum of oligomers from 0 to 5.

It is also clear from Table 4 that the % mole must be for y = the sum of oligomers from 0 to 3 of from 93.4 to 79.9. It is also clear that the present invention yields a foaming agent having improved foaming performance. The % foam in the gypsum block as made herein, having at least 25.6% foam as compared against 19.9 to 22.5 for US-A- 4 678 515 and 24.4 for CA-A- 1 085 880 and US 4 156 615 according to the above test.

In summary two criteria are of the utmost importance to produce a foaming agent having improved foaming performance in the making of gypsum panels, normally the carbon length of the alkyl group $CH_3$ - $(CH_2)_xCH_2$, and the degree of ethoxylation.

The alkyl group is determined by x, and ideally x should be between 6 and 8. However since the foaming agents are usually made from industrial grade fatty alcohols of mixed carbon lengths, it is from a practical purpose acceptable to have at least 90%, but preferably 98% and more of x beyween 6 and 8. Other carbon lengths for which x is not between 6 and 8, particularly those greater than 8 are detrimental and inhibit the foaming properties, since in the presence of gypsum products, when y is low the sulphates having x greater than 8 form a water insoluble product with gypsum that precipitates out of water, and as it precipitates out, additional amounts of the water soluble foaming agent react with additional amounts of the gypsum products to cause further precipitations, and thereby to that extent reducing the effectiveness of the blend as a foaming agent. This problem increases as the length of x increases, (over $x = 8$). This problem is effectively evaluated only when the foaming agent for gypsum products is evaluated in situ with the gypsum products (the $CaSO_4$ reacting). Any simulation with a clear solution of $CaSO_4$ does not give the concentration and equilibrium in production lines.

The average y must be between 0.4 and 1.3 as illustrated in Tables 3 and 4.

Alkyl ether sulphates are sensitive to Ca ions, they may react to form the calcium salt of the ether sulphate which depending upon the length of the alkyl group (x) and the degree of ethoxylation (y) may be water insoluble, and thereby may produce low foamers.

Referring back to the prior art, US- A- 4 678 515 is based on a claim that enhanced foaming performance is obtained when ether sulphates having an alkyl group in which x is 10 to 12 are added to ether sulphate in which $x = 6$ to 8. According to US- A- 4 678 515 "this is quite surprising since compounds in which $x = 10$ to 12 are poor foaming generators compared to their homologs in which $x = 6$ to 8" (column 2, lines 19-22). This foam enhancement is based on foaming tests conducted with saturated gypsum solutions from which gypsum has been removed before the foaming test is done. The present application shows that the ether sulphates covered by US- A- 4 678 515 are inferior to the foamers of the present invention when their performance is measured not in foaming tests but in the making of gypsum blocks using recipes typical of gypsum board manufacturing as in the real life. This is clearly stated on Table 2.

Most important is that the present invention is pointing away from US- A- 4 678 515 regarding the composition of the alkyl group. In the foamers of US- A- 4 678 515, the content of the alkyl group in which $x = 6$ to 8 must be 89% maximum and 67% minimum, and the rest must be $x = 10$ to 12, (column 6, lines 53 to 60). The present invention teaches the opposite, i.e., the content of the alkyl group in which $x = 6$ to 8 must be 90% minimum.

This is a key and a very clear difference: US- A-4 678 515 when a minimum of 11% of a foamer having $x = 10$ to 12 is added to a foamer having $x = 6$ to 8, the result is a product with enhanced foaming performance. For the present invention, the result is the opposite, i.e., inferior performance. As a result, what for US- A- 4 678 515 is a must (i.e., addition of at least 11% of ether sulphates in which $x = 10$ to 12), for the present invention is something to be totally avoided (i.e., 10% is the most - not the least - which is tolerable for x other than 6 to 8).

The degree of ethoxylation or y value of the ether group is also very important because the sensitivity of the foaming agents to the Ca ions and its intrinsic foaming profile is also affected by the value of y: As the y value increases, the sensitivity of the foaming agents to the Ca ions decreases, but its intrinsic foaming characteristic that is of the essence, also decreases. Therefore, finding the right balance between low Ca ion sensitivity and high foaming characteristics, i.e., the y value is key in foaming agents intended for wallboard manufacturing. CA-A- 1 085 880 and US-A- 4 156 615 exclude foamers in which the y value is less than 1.5. The present invention teaches a y value between 0.4 and 1.3, i.e. completely different to the range of CA-A- 1 085 880 and US-A- 4 678 515.

The reason for this difference is clearly shown in Tables 3 and 4 hereinabove. Sample A is the core of CA-A- 1 085 880 and US-A- 4 156 615 (y value of 2.2). Sample E is outside CA-A- 1 085 880 and US-A-4 156 615 (and US-A- 4 678 515) since $y = 0$. Examples 1, 2 and 5 of the present invention were prepared by blending appropriate proportions of samples A and E. In other words, the blending of the product of CA-A-1 085 880 and US-A- 4 156 615 with an inferior foamer resulted in a synergistic effect, since the blends were superior to the individual products. This is clearly illustrated in Tables 3 and 4 hereinabove.

## Claims

1. A foaming agent which comprises a blend of alkyl sulphates and alkyl ether sulphates having an improved foaming performance, wherein the blend has the general formula:

$$CH_3(CH_2)_xCH_2-(OCH_2CH_2)_y-OSO_3M$$

   wherein at least 90% of x is between 6 and 8,
   the $CH_3(CH_2)_xCH_2$ is forming a chain selected from at least one of linear and branched chains,
   the average y is between 0.4 and 1.3, and wherein M is a cation producing a water soluble surfactant.

2. A foaming agent according to claim 1, wherein at least 98% of x is between 6 and 8.

3. A foaming agent according to claim 1 or 2, wherein the average y is from 0.7 to 0.9.

4. A foaming agent according to any of claims 1 to 3, wherein M is selected from ammonium, sodium, potassium, calcium and magnesium.

5. A foaming agent according to any of claims 1 to 4, wherein, on a weight percent distribution of the oxyethylene oligomers, the oligomeric species in which $y = o$ is from 78.9 to 27.0% and the sum of oligomeric species from $y = o$ to 5 is from 95.5 to 83.8% of the total oligomeric content.

6. A foaming agent according to any of claims 1 to 4, wherein on a mole percent distribution of the oxyethylene oligomers, the sum of oligomers from $y = o$ to 3 is from 93.4 to 79.9% of the total oligomeric content.

7. A foaming agent according to any of claims 1 to 6, being ammonium alkyl ether sulphate.

8. A foaming agent according to any of claims 1 to 7, wherein $(CH_2)_x$ is a linear chain.

9. A foaming agent according to any of claims 1 to 8, being diluted with a carrier, the foaming agent being the major constituent.

10. A foaming agent according to claim 9, wherein the carrier is selected from low molecular weight alcohols.

11. A method of making gypsum board which comprises mixing with gypsum a foaming agent according to any of claims 1 to 10.

12. A method according to claim 11, wherein the amount of foaming agent is 0.03% ± 0.01 per 100 parts of stucco on finished product, as determined by CTFA method 8-1 of the Cosmetic Toiletry and Fragrance Association of Washington D-C.

13. A gypsum product containing the foaming agent according to any of claims 1 to 10 left as a residuum.

14. A gypsum product according to claim 13, wherein there is at least 25.6% foam in the gypsum product.

## Patentansprüche

1. Schaummittel, das eine Mischung von Alkylsulfaten und Alkylethersulfaten mit einem verbesserten Schäumverhalten umfaßt, worin die Mischung die allgemeine Formel besitzt:

$$CH_3(CH_2)_xCH_2-(OCH_2CH_2)_y-OSO_3M$$

   worin mindestens 90 % von x zwischen 6 und 8 beträgt, das $CH_3(CH_2)_xCH_2$ eine Kette bildet ausgewählt aus mindestens einer von linearen und verzweigten Ketten, das durchschnittliche y zwischen 0,4 und 1,3 beträgt und worin M ein Kation ist, welches ein wasserlösliches oberflächenaktives Mittel erzeugt.

2. Schaummittel nach Anspruch 1, worin mindestens 98 % von x zwischen 6 und 8 beträgt.

3. Schaummittel nach Anspruch 1 oder 2, worin das durchschnittliche y von 0,7 bis 0,9 beträgt.

4. Schaummittel nach einem der Ansprüche 1 bis 3, worin M ausgewählt ist aus Ammonium, Natrium, Kalium, Calcium und Magnesium.

5. Schaummittel nach einem der Ansprüche 1 bis 4, worin bezogen auf eine gewichtsprozentuale Verteilung der Oxyethylen-Oligomere, die Oligomer-Species, in der y = 0 von 78,9 bis 27,0 % beträgt und die Summe von Oligomer-Species von y = 0 bis 5 von 95,5 bis 83,8 % des gesamten Oligomerengehaltes beträgt.

6. Schaummittel nach einem der Ansprüche 1 bis 4, worin bezogen auf eine molprozentuale Verteilung der Oxyethylen-Oligomere, die Summe von Oligomeren von y = 0 bis 3 von 93,4 bis 79,9 % des gesamten Oligomerengehaltes beträgt.

7. Schaummittel nach einem der Ansprüche 1 bis 6, das Ammoniumalkylethersulfat ist.

8. Schaummittel nach einem der Ansprüche 1 bis 7, worin $(CH_2)_x$ eine lineare Kette ist.

9. Schaummittel nach einem der Ansprüche 1 bis 8, das mit einem Carrier verdünnt ist, wobei das Schaummittel der Hauptbestandteil ist.

10. Schaummittel nach Anspruch 9, worin der Carrier aus Alkoholen mit niedrigem Molukulargewicht ausgewählt ist.

11. Verfahren zur Herstellung von Gipsplatten, das das Mischen eines Schaummittels nach einem der Ansprüche 1 bis 10 mit Gips umfaßt.

12. Verfahren nach Anspruch 11, worin die Menge an Schaummittel 0,03 % ± 0,01 auf 100 Teile Gipsmörtel auf dem Endprodukt beträgt, wie nach dem CTFA-Verfahren 8-1 der Cosmetic Toiletry and Fragrance Association in Washington D.C. bestimmt.

13. Gipsprodukt, das das Schaummittel nach einem der Ansprüche 1 bis 10 enthält, als Residuum.

14. Gipsprodukt nach Anspruch 13, worin mindestens 25,6 % Schaum im Gipsprodukt vorhanden ist.

**Revendications**

1. Agent moussant qui comprend un mélange d'alkyl-sulfates et d'alkyl-éther-sulfates ayant une efficacité de moussage améliorée, dans lequel le mélange répond à la formule générale :

$CH_3(CH_2)_xCH_2$-$(OCH_2CH_2)_y$-$OSO_3M$

où
   au moins 90 % des x sont compris entre 6 et 8,
   le groupement $CH_3(CH_2)_xCH_2$ forme une chaîne choisie parmi au moins l'une de chaînes linéaires et ramifiées,
   la valeur y moyenne est comprise entre 0,4 et 1,3, et
   M est un cation produisant un agent tensio-actif hydrosoluble.

2. Agent moussant selon la revendication 1, dans lequel au moins 98 % des x sont compris entre 6 et 8.

3. Agent moussant selon la revendication 1 ou 2, dans lequel la valeur y moyenne est de 0,7 à 0,9.

**4.** Agent moussant selon l'une quelconque des revendications 1 à 3, dans lequel M est choisi parmi l'ammonium, le sodium, le potassium, le calcium et le magnésium.

**5.** Agent moussant selon l'une quelconque des revendications 1 à 4, dans lequel, dans une distribution en pourcentages en poids des oligomères d'oxyéthylène, l'espèce oligomère où y = 0 compte pour 78,9 à 27,0 % et la somme des espèces oligomères où y = 0 à 5 compte pour 95,5 à 83,8 % de la quantité totale d'oligomères.

**6.** Agent moussant selon l'une quelconque des revendications 1 à 4, dans lequel, dans une distribution en pourcentages molaires des oligomères d'oxyéthylène, la somme des oligomères où y = 0 à 3 compte pour 93,4 à 79,9 % de la quantité totale d'oligomères.

**7.** Agent moussant selon l'une quelconque des revendications 1 à 6, qui est un alkyl-éther-sulfate d'ammonium.

**8.** Agent moussant selon l'une quelconque des revendications 1 à 7, dans lequel $(CH_2)_x$ est une chaîne linéaire.

**9.** Agent moussant selon l'une quelconque des revendications 1 à 8, qui est dilué avec un véhicule, l'agent moussant étant le constituant principal.

**10.** Agent moussant selon la revendication 9, dans lequel le véhicule est choisi parmi les alcools de bas poids moléculaire.

**11.** Procédé de fabrication de panneaux de plâtre, dans lequel on mélange du plâtre avec un agent moussant selon l'une quelconque des revendications 1 à 10.

**12.** Procédé selon la revendication 11, dans lequel la quantité d'agent moussant est de 0,03 % ± 0,01 pour 100 parties de stuc dans le produit fini, telle que déterminée par la méthode CTFA 8-1 de Cosmetic Toiletry and Fragrance Association, Washington D.C.

**13.** Produit de plâtre contenant l'agent moussant selon l'une quelconque des revendications 1 à 10 laissé comme résidu.

**14.** Produit de plâtre selon la revendication 13, dans lequel il y a au moins 25,6 % de mousse dans le produit de plâtre.